# EUROPÄISCHE PATENTSCHRIFT

(11) **EP 3 044 138 B1**
(45) Veröffentlichungstag und Bekanntmachung des Hinweises auf die Patenterteilung: **21.02.2018**
(21) Anmeldenummer: 14784191.0
(22) Anmeldetag: 11.09.2014
(51) Int. Cl.: B65G 47/14

(54) **ZELLENRADBUNKER ZUR FÖRDERUNG UND VEREINZELUNG VON WENIGSTENS EINEN SCHAFT AUFWEISENDEN VERBINDUNGSELEMENTEN**
ROTARY FEEDER HOPPER FOR CONVEYING AND SEPARATING CONNECTION ELEMENTS THAT HAVE AT LEAST ONE SHAFT
TRÉMIE À ROUE ALVÉOLAIRE POUR ALIMENTER ET INDIVIDUALISER DES ÉLÉMENTS D'ASSEMBLAGE COMPORTANT AU MOINS UNE TIGE

(30) Priorität: 11.09.2013 DE 102013109952
(43) Veröffentlichungstag der Anmeldung: 20.07.2016
(73) Patentinhaber: EJOT GmbH & Co. KG, 57319 Bad Berleburg (DE)
(72) Erfinder: SPINDLER, Daniel, 99894 Friedrichroda (DE); MIELISCH, Marco, 99099 Erfurt (DE)
(74) Vertreter: Puschmann Borchert Bardehle Patentanwälte Partnerschaft mbB
(86) Internationale Anmeldenummer: PCT/EP2014/069427
(87) Internationale Veröffentlichungsnummer: WO 2015/036500

(56) Entgegenhaltungen:
- CH-A5- 596 064
- FR-A- 1 126 899
- GB-A- 904 634
- GB-A- 1 423 318
- US-A- 3 295 659
- US-A- 3 684 129

## Beschreibung

Die Erfindung betrifft einen Zellenradbunker gemäß der im Oberbegriff des Anspruchs 1 angegebenen Art.
Gattungsgemäße Zellenradbunker sind beispielsweise aus der US 4,312,438, der US 3,254,753 oder der EP 2 295 350 A1 bekannt. Sie weisen ein Zellenrad auf, welches von einer Bunkerwand umgeben ist. Das Zellenrad dreht sich in einer Förderdrehrichtung um seinen Mittelpunkt und fördert dabei einen Schaft aufweisende Elemente in seinen Förderzellen, wobei die Elemente aus einem in Form von Schüttgut in den Zellenradbunker eingefüllten Elemente herausgenommen werden. Um eine Lageorientierung zu gewährleisten, sind in der Regel sogenannte Schikanen vorgesehen, die nicht korrekt orientierte Elemente aus den Förderzellen auswerfen. Die einzelnen Elemente werden in den Förderzellen gegen die Schwerkraft gefördert und an einer Ausbringposition dem Zellenradbunker einzeln entnommen. CH 596 064 offenbart einen gattungsgemäßen Zellenradbunker. Es ist Aufgabe der Erfindung, einen Zellenradbunker gemäß der im Oberbegriff des Anspruchs 1 angegebenen Art derart weiterzubilden, dass der Wirkungsgrad verbessert wird.
Die Aufgabe wird durch die kennzeichnenden Merkmale des Anspruchs 1 in Verbindung mit seinen Oberbegriffsmerkmalen gelöst.
Die Unteransprüche bilden vorteilhafte Weiterbildungen der Erfindung.
In bekannter Weise umfasst ein Zellenradbunker zur Förderung und Vereinzelung von wenigstens einen Schaft aufweisenden Elementen, insbesondere einen Schaft und einen Kopf aufweisenden Elementen, ein Zellenrad, welches in radialer Richtung liegende Förderzellen zur Förderung der Elemente aufweist. Das Zellenrad ist von einer Bunkerwand wenigstens teilweise umgeben. Die Förderzellen weisen Durchbrüche am Zellenrand auf, wobei unterhalb des Zellenrads im Bereich der Durchbrüche eine Rollfläche angeordnet ist, auf welcher die einen Schaft aufweisenden Elemente mit ihrem Schaft wenigstens teilweise aufliegen und rollend gefördert werden. Das Zellenrad ist insbesondere gegenüber der Horizontalen geneigt angeordnet. Ein Schaft im Sinne der Erfindung ist ein im Wesentlichen rotationssymmetrisches Element dessen Höhe größer als sein Querschnittsdurchmesser ist.

Erfindungsgemäß ist die Rollfläche derart ausgebildet, dass diese wenigstens in ihrem Außenumfang kreisförmig ist und in ihrem Außendurchmesser dem Durchmesser des Zellenrads entspricht. Durch die Gleichheit des Durchmessers der Rollfläche und des Zellenrads kann gewährleistet werden, dass Elemente, die neben dem Schaft auch einen am Schaft angeformten Kopf aufweisen, so geführt werden, dass der Schaft auf der Rollfläche rollend geführt wird und der Kopf hängend außerhalb des Durchmessers des Zellenrads liegt. Dadurch kann auf einfache Weise eine Lageorientierung der Elemente erreicht werden

Durch die in das Zellenrad eingebrachten Durchbrüche, in welchen die Schaftelemente rollend bewegt werden, werden in den Zellenradbunker eingebrachte Verunreinigungen oder entstandene Abriebe aus dem Zellenradbunker abgeführt. Dadurch kann sich Verschmutzung nicht in den Förderzellen ablagern und langfristig die Ausbeute verschlechtern. Dadurch wird eine hohe Wartungsfreiheit bei hoher Ausbeute gewährleistet.

Gemäß einer vorteilhaften Weiterbildung der Erfindung weist eine Förderzelle in radialer Richtung vom Durchbruch nach innen verlaufend eine Abführschräge auf. Die Abführschräge hat in Relation zur Zellenradoberfläche ihr niedrigstes Niveau am Durchbruch. Dadurch werden beispielsweise Förderelemente mit Kopf, deren Schaftlänge kleiner als die Höhe des Zellenrades am Durchbruch ist, an einer Auswurfschikane leichter ausgeworfen. Auf diese Weise kann zuverlässig ein Auswurf falscher lageorientierter Elemente vorgenommen werden, wodurch die freien Förderzellen zur Aufnahme neuer Elemente bereitgestellt werden. Dies erhöht wiederum die Ausbeute des Systems. Insbesondere Elemente, die beispielsweise senkrecht im Durchbruch hängen oder stecken, werden über die Abführschräge, sobald die Förderzelle eine Position erreicht, in der die resultierende Abtriebskraft etwa entlang des Durchbruchs der Förderzelle gerichtet ist, schon weitgehend durch die Schwerkraft ausgeworfen.

Zudem erweist es sich als vorteilhaft, dass wenigstens auf axialer Höhe des Zellenrades eine umfängliche Wandung vorgesehen sein kann. Diese verhindert ein vorzeitiges Herausfallen der Elemente aus der Förderzelle. Durch eine Beabstandung der umfänglichen Wandung vom Zellenrad kann eine Führung für einen Kopf aufweisende Elemente bereitgestellt werden. Ein solcher Spalt erlaubt, dass der Kopf über die Außenkante in die richtige Lage einschwenken kann und dadurch eine Steuerung der Lageorientierung der Elemente durch eine Anpassung an die Kopfgröße der Elemente erfolgt. Vorzugsweise kann die umfängliche Wandung als Baueinheit mit der Bunkerwand ausgestaltet sein. Dies stellt eine besonders einfache Gestaltung eines Zellenradbunkers dar. Die umfängliche Wandung kann aber auch durch ein Einsatzteil gebildet werden, das zwischen Bunkerwand und Zellenrad eingesetzt wird. Dies erhöht die Flexibilität in Bezug auf die Anpassung eines Zellenradbunkers an unterschiedliche Kopfgrößen.

Einen Schaft und einen Kopf aufweisende Elemente können beispielsweise Schrauben, Reibschweißelemente oder Nägel sein.

Der Abstand der umfänglichen Wandung ist so gewählt, dass ein Klemmen des Kopfes des Elements an der umfänglichen Wandung, insbesondere der Bunkerwand, bei Drehung des Zellenrads vermieden wird. Insbesondere ist der Abstand zwischen Zellenrad und umfänglicher Wandung so bemessen, dass dieser kleiner als der Schaftdurchmesser aber zwischen dem 1,2-fachen und dem 1,8-fachen der Kopfhöhe eines einen Kopf aufweisenden Elements entspricht.

In einer weiteren vorteilhaften Ausgestaltung kann an der Rollfläche eine Auswurfschikane vorgesehen sein, welche nicht korrekt lageorientierte Elemente aus der Förderzelle auswirft. Aufgrund der Durchbrüche kann die Auswurfschikane an der Rollfläche angebracht sein und durch die Durchbrüche auf das Element wirken. Dies vereinfacht den Auswurf der Elemente, da die Auswurfschikane ausschließlich auf das eine Element in dem Durchbruch wirkt. Es ist dabei ausgeschlossen, wie es bei Auswurfschikanen, die an der den Elementen zugewandten Seite des Zellenrades liegen, der Fall sein kann, dass sich die Elemente mit der Auswurfschikane verklemmen. Dies sorgt für eine verbesserte Wartungsfreiheit und eine verbesserte Ausbeute.

Der Auswurf ist in seiner Wirkrichtung durch die Schikane besonders effektiv, da außer der Bewegung orthogonal zum Zellenrad keine zusätzlichen Wege oder Bewegungen des Elements für einen Auswurf desselben notwendig sind.

In einer besonders vorteilhaften Ausführungsform kann die Auswurfschikane als feststehender Keil an der Rollfläche ausgestaltet sein. Durch die Drehbewegung des Zellenrads wird ein falsch ausgerichtetes Element so weit aus dem Durchbruch des Zellenrads gehoben, bis dieses aufgrund der Abtriebskraft aus der Förderzelle herausfällt. Ferner kann das Zellenrad an seiner Unterseite eine umlaufende Nut in der Breite und Höhe der Auswurfschikane aufweisen. Auf diese Weise kann das Zellenrad über die Auswurfschikane hinweggeführt werden, ohne daran zu verklemmen, wobei die Auswurfschikane dennoch auf die im Durchbruch der Förderzellen geführten Elemente einwirken kann.

Das Verhältnis von der Höhe der Auswurfschikane gegenüber der Höhe der Rollfläche kann kleiner sein als die Hälfte der Summe des Schaftdurchmessers der Elemente und der Dicke des Zellenrads. Durch eine solche Abstimmung kann erreicht werden, dass die Elemente mit korrekter Lageorientierung nicht ausgeworfen werden.

Gemäß der Erfindung können auch mehrere Auswurfschikanen hintereinander angeordnet werden. Dadurch wird das Element immer bei der in Drehrichtung ersten Schikane ausgeworfen, wodurch auf die nachfolgenden Schikanen kein Element mehr wirkt. Dadurch verschleißt immer die in Drehrichtung erste Schikane, wobei ein Austausch erst nach Verschleißen der letzten Schikane notwendig ist, wodurch Wartungsintervalle erheblich erhöht werden können.

Vorzugsweise kann die Rollfläche einen Ausbringspalt aufweisen, der so bemessen ist, dass Elemente mit korrekter Lageorientierung durch den Ausbringspalt fallen können, sobald sie durch das Zellenrad über den Ausbringspalt geschoben werden. Insbesondere erstreckt sich der Ausbringspalt in radialer Richtung, wobei nur Elemente ausgebracht werden können, die mit der Lage ihres Schafts in dieser Richtung angeordnet sind. Die Spaltbreite entspricht insbesondere etwa der Breite der Durchbrüche mit einer Toleranz von 10%. Dadurch erfolgt eine zu einer Auswurfschikane zusätzliche Sortierfunktion nach Lageorientierung. Durch diese Anordnung ist keine Ausbring-Aktorik notwendig und die Elemente können nur durch die Schwerkraft in der Bewegung vereinzelt und lageorientiert abgeführt werden.

In einer weiteren Ausführungsform kann an den Spalt eine Ausbringschiene anschließen, in welcher die Elemente, nachdem sie durch den Spalt gefallen sind, zur Weiterverarbeitung geführt werden. Durch eine entsprechende Ausbringschiene kann ein Puffer zur Weiterverarbeitung bereitgestellt werden, dessen Kapazität über die Länge der Ausbringschiene einstellbar ist. Die Ausbringschiene ist insbesondere im Wesentlichen senkrecht zum Zellenrad angeordnet. Dies ermöglicht eine optimale und verklemmungsfreie Ausbringung. In einer weiteren Fortbildung kann die Ausbringschiene an die Geometrie des Elements angepasst sein.

Bevorzugt können die Kanten des Ausbringspalts abgerundet sein. In besonders vorteilhafter Weise kann der Radius ausgehend von der Rollfläche zur Ausbringschiene bezogen auf die Förderdrehrichtung des Zellenrades kleiner sein als der gegenüberliegenden Radius ausgehend von der Ausbringschiene zur Rollfläche bezogen auf die Förderdrehrichtung. Dadurch kann ein Verklemmen der Elemente bei voller Ausbringschiene vermieden werden, da Elemente über die gerundete Kante, ausgehend von der Ausbringungsschiene zur Rollfläche, verklemmfrei weitergefördert werden können und nach dem Ausbringspalt auf der Rollfläche weitergefördert werden.

Verbessert werden kann dieser Effekt, indem die Rollfläche in Förderdrehrichtung nach dem Ausbringspalt ein niedrigeres Niveau als die Rollfläche vor dem Ausbringspalt hat. Bei voller Ausbringschiene kann mit geringer Toleranz ein Element vom Zellenrad wieder mitgenommen werden, ohne dass ein Verklemmen auftritt.

Vorzugsweise kann das Zellenrad aus Kunststoff ausgebildet sein. Dadurch erfolgt eine schonendere Behandlung der Elemente bei geringeren Herstellungskosten. Sollte eine Klemmung eines Elements im Ausbringspalt vorliegen, kann diese durch die Elastizität eines Kunststoffzellenrads kompensiert werden, da das Kunststoffzellenrad in einem solchen Fall nachgibt und über das Element hinweg gleitet und nicht blockiert.

Gemäß einer weiteren Ausführungsform kann das Zellenrad über einen Freilauf entgegen der Förderdrehrichtung an einen Antrieb angebunden sein. Dies erleichtert im Störfall eine Entstörung, da verklemmte Elemente auf einfache Weise gelöst werden können.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: ein erfindungsgemäßes Zellenrad zur Förderung und Vereinzelung von in Schüttgut eingebrachten einen Schaft aufweisenden Elementen;
- Fig. 2: eine Draufsicht auf einen erfindungsgemäßen Zellenradbunker;
- Fig. 3: einen Schnitt A-A durch den Zellenradbunker;
- Fig. 4: eine Draufsicht auf den Zellenradbunker;
- Fig. 5: eine in die Rollfläche integrierte Auswurfschikane, und
- Fig. 6: eine seitliche Draufsicht auf das Zellenrad im Bereich der Ausbringungsstelle mit ausgeschnittener Bunkerwand.

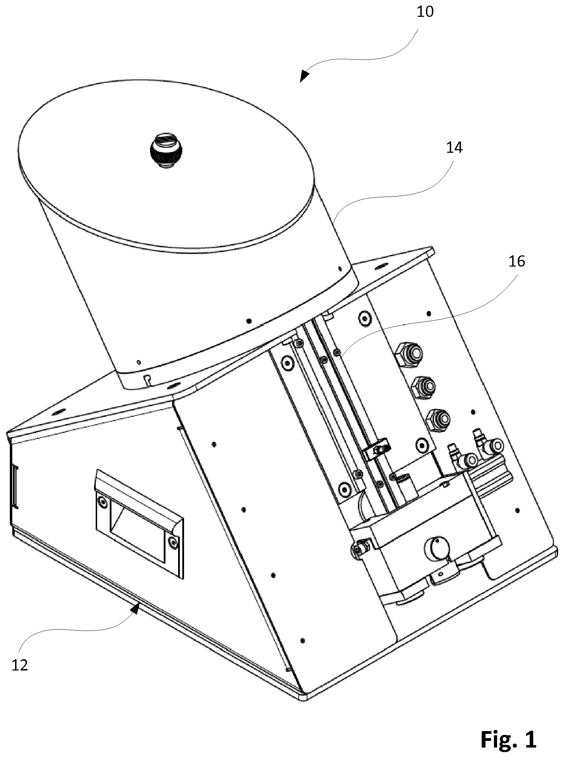

Fig. 1 zeigt den Zellenradbunker 10 mit seinem den Antrieb aufnehmenden Gehäuse 12, einer ein Zellenrad 18 umgebenden Bunkerwand 14 und einer an einen Bunkerboden anschließenden Ausbringschiene 16. Elemente die innerhalb der Bunkerwand 14 aufgenommen sind, werden über die Drehung eines Zellenrads 18 an die Oberseite des geneigten Zellenrads 18 gefördert und fallen dann mittels der Schwerkraft in die Ausbringschiene 16, wo sie abhängig von der Länge der Ausbringschiene 16 gepuffert werden können.

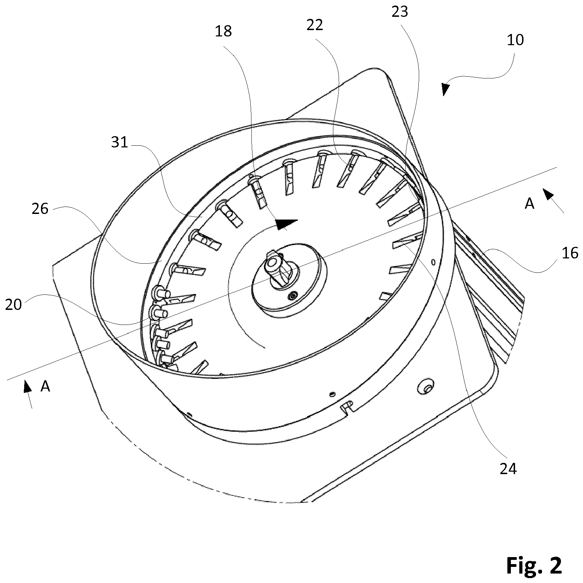

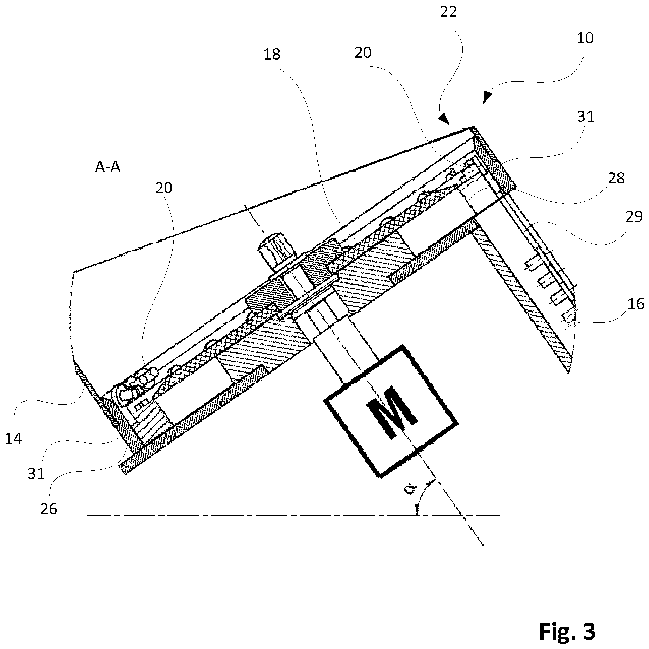

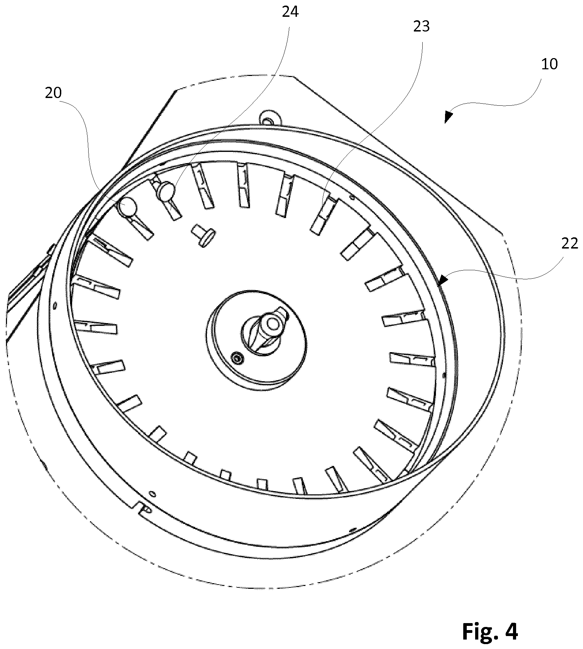

Fig. 2 zeigt eine Draufsicht auf einen erfindungsgemäßen Zellenradbunker 10, der ein Zellenrad 18 aufweist, welches bei Drehung in der angezeigten Richtung einen Schaft aufweisende Elemente mit einem Kopf 20 lageorientiert befördert und einzeln an der dargestellten Ausbringschiene 16 ausgibt. Das Zellenrad 18 weist Förderzellen 22 auf, in welchen die Elemente 20 gefördert werden. Die Förderzellen 22 weisen dabei Durchbrüche 23 im Randbereich auf, deren Funktion in Fig. 3 näher erläutert wird. Zudem sind die Förderzellen mit einer Auswurfschräge 24 versehen, auf deren Funktion in Fig. 4 näher eingegangen wird. Gut erkennbar in Fig. 2 ist, dass zwischen dem Zellenrad 18 und einer umfänglichen Wandung 26 ein Spalt 31 eingestellt ist, in welchen der Kopf des Elements 20 aufgenommen ist, wodurch die Elemente lagerorientiert gefördert werden können. Entsprechend können die Elemente lagerorientiert vereinzelt werden, was in Fig. 3 näher beschrieben ist. Das Spaltmaß des Spalts 31 ist dabei an die Kopfgröße angepasst.

Fig. 3 zeigt einen Schnitt A-A durch den Zellenradbunker 10. Die Elemente 20 fallen während der Drehung in die Förderzellen 22 hinein. Dabei liegen die Elemente 20 auf einer unter dem Zellenrad 18 befindlichen Rollfläche 28 auf, wobei bei Drehung des Zellenrades 18 richtig lageorientierte Elemente so geführt werden, dass diese mit ihrem Schaft über die Rollfläche 28 rollen. Dies ermöglicht einen besonders schonenden Transport. Wie in Fig. 3 dargestellt, weist die Rollfläche 28 einen Ausbringspalt 29 im Ausbringungsbereich auf, wobei die Elemente 20 mit ihrem Schaft durch den Spalt aufgrund der Schwerkraft ausgebracht werden und anschließend in einer Ausbringschiene 16 zur Weiterverarbeitung geführt werden. Gemäß dieser Ausführungsform ist die Rollfläche 28 in Form eines Rings ausgebildet, der im Ausbringbereich durch den Ausbringspalt 29 unterbrochen ist. Der Ring weist in seinem äußeren Bereich, der über den Durchmesser des Zellenrads hinausgeht, eine Nut auf, die auf den Kopfdurchmesser der befördernden Elemente so angepasst ist, dass die Elemente mit dem Kopf aufliegend oder freihängend gefördert werden. Insgesamt werden die Köpfe gegenüber der umfänglichen Wandung 26 geführt, die auch als Aufnahme für die Bunkerwand 14 wirkt. Schematisch ist dieser Darstellung auch der Motor zu entnehmen, mit welchem das Zellenrad über einen Freilauf, der eine Freigabe des Zellenrades 18 entgegen der Förderdrehrichtung ermöglicht, verbunden ist.

Fig. 4 zeigt eine Draufsicht auf den Zellenradbunker 10, wobei in dieser Darstellung das Element 20 durch die Auswurfschräge 24 bei entsprechender Abtriebskraft aus dem Durchbruch 23 leichter abgeführt werden kann.

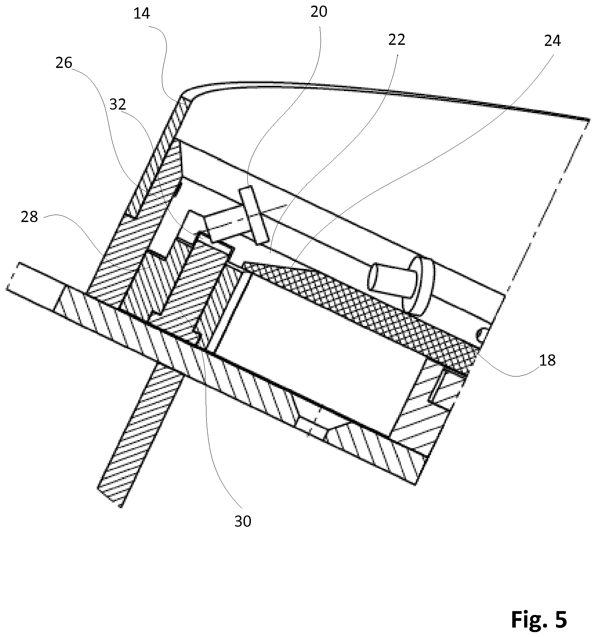

Dies ist insbesondere zutreffend für Elemente 20, deren Schaftlänge kürzer als die Zellenraddicke ist. Um nicht korrekt lageorientierte Elemente 20 auszuwerfen, kann gemäß der Erfindung wie in Fig. 5 dargestellt, eine Auswurfschikane 30 in die Rollfläche 28 integriert sein. Besonders gut zu sehen an dieser Darstellung ist der Schnitt durch die Förderzelle 22, die zum einen über den Durchbruch 23 den Kontakt der Elemente 20 zur Rollfläche 28 ermöglicht. Zudem ist die radial verlaufende Auswurfschräge 24 sowie eine in die Unterseite des Zellenrads eingebrachte Nut 32, die in ihrer Höhe und Breite der Auswurfschikane 30 entspricht, gezeigt. Die Nut 32 ist entsprechend so gestaltet, dass das Zellenrad 18 während der Förderung über die Auswurfschikane 30 ungestört hinweg bewegt werden kann, auf der anderen Seite aber zuverlässige Elemente 20, deren Lageorientierung nicht korrekt ist, aus den Förderzellen 22 entfernt werden können. Durch die Anordnung der Auswurfschikane 30 unterhalb des Zellenrads 18 kann ein Verklemmen der als Schüttgut eingebrachten Elemente 20 mit einer Auswurfschikane 30 nachhaltig vermieden werden, zudem wird beim Auswurf der Elemente 20 nur explizit auf das auszuwerfende Element 20 eingewirkt.

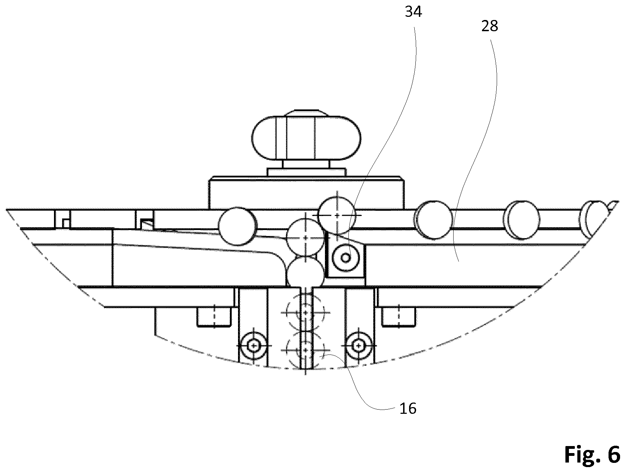

Fig. 6 zeigt eine seitliche Draufsicht auf das Zellenrad im Bereich der Ausbringungsstelle mit ausgeschnittener Bunkerwand. Die in den Durchbrüchen 23 des Zellenrads 18 auf der Rollfläche 28 geförderten Elemente 20 in richtiger Lageorientierung werden in der Regel bis zu dem Ausbringspalt 29 geführt, der in der ringförmigen Rollfläche 28 vorgesehen ist und fallen von dort in die Ausbringschiene 16. Für den Fall, dass die Ausbringschiene 16 voll ist, ist in Förderrichtung vor dem Ausbringspalt 29 eine Schikane 34 vorgesehen, die Elemente 20 über das gestaute Element 20 hinwegheben kann. Auf diese Weise wird eine Verklemmung vermieden. Auf der anderen Seite kann dieser Effekt noch dadurch verbessert werden, dass das Niveau der Rollfläche 28 in Förderdrehrichtung jenseits des Ausbringspalts 29 niedriger ist als in Förderdrehrichtung vor dem Ausbringspalt 29. Zudem ist die Rollfläche 28 von der Oberkante zum Ausbringspalt 29 abgerundet, um ein verklemmungsfreies Wieder-Mitnehmen gestauter Elemente 20 zu ermöglichen. Dies erhöht erheblich die Wartungsfreiheit des erfindungsgemäßen Zellenradbunkers 10. Durch die Durchbrüche 23 im Zellenrad 18 und der rollenden Förderung der Elemente 20 wird auch eine hohe Quote der korrekt lageorientierten Elemente 20 erreicht.

## Patentansprüche

1. Zellenradbunker (10) zur Förderung und Vereinzelung von wenigstens einen Schaft aufweisenden Elementen (20), umfassend ein Zellenrad (18), welches in radialer Richtung liegende Förderzellen (22) zur Förderung der Element (20) aufweist, wobei das Zellenrad (18) von einer Bunkerwand (14) wenigstens teilweise umgeben ist, wobei die Förderzellen (22) Durchbrüche (23) am Zellenrad (18) aufweisen und unterhalb des Zellenrads (18) im Bereich der Durchbrüche (23) eine Rollfläche (28) angeordnet ist, auf welcher die einen Schaft aufweisenden Elemente (20) mit ihrem Schaft wenigstens teilweise aufliegen und rollend gefördert werden können, **dadurch gekennzeichnet, dass** die Rollfläche (28) wenigstens in ihrem Außenumfang kreisförmig gestaltet ist und in ihrem Außendurchmesser wenigstens teilweise dem Durchmesser des Zellenrads (18) entspricht.

2. Zellenradbunker nach Anspruch 1, **dadurch gekennzeichnet, dass** die Förderzelle (22) vom Durchbruch (23) radial nach innen verlaufend eine Auswurfschräge (24) aufweist.

3. Zellenradbunker nach einem der vorangehenden Ansprüche, **dadurch gekennzeichnet, dass** wenigstens auf axialer Höhe des Zellenrads (18) eine umfängliche Wandung (26) vorgesehen ist.

4. Zellenradbunker nach Anspruch 3, **dadurch gekennzeichnet, dass** der Durchmesser der umfänglichen Wandung (26) so bemessen ist, dass sich ein Kopfspalt (31) zwischen umfänglicher Wandung (26) und Zellenrad (18) ergibt, in welchem ein Kopf eines Elements (20) geführt werden kann.

5. Zellenradbunker nach einem der Ansprüche 3 oder 4, **dadurch gekennzeichnet, dass** die umfängliche Wandung (26) eine Baueinheit mit der Bunkerwand (14) bildet.

6. Zellenradbunker nach einem der vorangehenden Ansprüche, **dadurch gekennzeichnet, dass** an der Rollfläche (28) eine erhabene Auswurfschikane (30) vorgesehen ist, welche nicht korrekt lageorientierte Elemente (20) aus der Förderzelle (22) auswirft.

7. Zellenradbunker nach Anspruch 6, **dadurch gekennzeichnet, dass** die Auswurfschikane (30) insbesondere als Keil an der Rollfläche (28) ausgestaltet ist und das Zellenrad (18) an seiner Unterseite eine umlaufende Nut (32) mit wenigstens der Breite und Höhe der Auswurfschikane (30) aufweist.

8. Zellenradbunker nach einem der vorangehenden Ansprüche 6 oder 7, **dadurch gekennzeichnet, dass** die Höhe der Auswurfschikane (30) gegenüber der Rollfläche (28) so gestaltet ist, dass korrekt lageorientierte Elemente (20) nicht ausgeworfen werden und falsch lageorientierte Elemente (20) ausgeworfen werden.

9. Zellenradbunker nach einem der vorangehenden Ansprüche, **dadurch gekennzeichnet, dass** die Rollfläche (28) einen Ausbringspalt (29) zur Ausbringung der Elemente (20) aufweist.

10. Zellenradbunker nach einem der vorangehenden Ansprüche, **dadurch gekennzeichnet, dass** an den Ausbringspalt (29) eine Ausbringschiene (16) anschließt, welche durch den Spalt abgeführte Elemente (20) aufnimmt.

11. Zellenradbunker nach einem der vorangehenden Ansprüche 9 oder 10, **dadurch gekennzeichnet, dass** die Rollfläche (28) am Ausbringspalt (29) abgerundet ist, wobei der Radius ausgehend von der Rollfläche (28) in Richtung des Spalts zur Abführschiene (16) in Drehrichtung des Zellenrads (18) kleiner als der in Drehrichtung gegenüberliegende Radius ausgehend vom Ausbringspalt (29) zur Rollfläche (28) ist.

12. Zellenradbunker nach einem der vorangehenden Ansprüche, **dadurch gekennzeichnet, dass** das Zellenrad (18) aus Kunststoff ausgebildet ist.

13. Zellenradbunker nach einem der vorangehenden Ansprüche, **dadurch gekennzeichnet, dass** das Zellenrad (18) über einen Freilauf entgegen der Förderdrehrichtung mit einem Antrieb des Zellenradbunkers (10) versehen ist.

## Claims

1. Rotary feeder hopper (10) for conveying and separating connection elements (20) that have at least one shaft, comprising a star feeder (18) which has conveyor cells (22) disposed in the radial direction for conveying these elements (20), wherein the star feeder (18) is at least partially surrounded by a hopper wall (14), wherein the conveyor cells (22) have through-holes (23) in the star feeder (18) and wherein a rolling surface (28) is provided below the star feeder (18) in the area of the through-holes (23), with the elements (20) that have a shaft resting at least partially with their shafts on this rolling surface (28), thus allowing them to be conveyed in a rolling manner, **characterized in that** at least the outer circumference of the rolling surface (28) is of a circular design, and its outer diameter corresponds at least partially to the diameter of the star feeder (18).

2. Rotary feeder hopper according to claim 1, **characterized in that** the conveyor cell (22) has an ejection ramp (24) which extends radially inwards from the through-hole (23).

3. Rotary feeder hopper according to one of the preceding claims, **characterized in that** a circumferential wall (26) is provided at least at the axial height of the star feeder (18).

4. Rotary feeder hopper according to claim 3, **characterized in that** the diameter of the circumferential wall (26) is dimensioned such that a head gap (31) is formed between the circumferential wall (26) and the star feeder (18), which head gap (31) is adapted to guide a head of an element (20) therein.

5. Rotary feeder hopper according to one of claims 3 or 4, **characterized in that** the circumferential wall (26) forms an integral unit with the hopper wall (14).

6. Rotary feeder hopper according to one of the preceding claims, **characterized in that** a raised ejector baffle plate (30) is provided on the rolling surface (28), which baffle plate (30) serves to eject incorrectly positioned elements (20) from the conveyor cell (22).

7. Rotary feeder hopper according to claim 6, **characterized in that** the ejector baffle plate (30) is designed in particular as a wedge on the rolling surface (28), and that on the underside of the star feeder (18) a circumferential groove (32) is provided that has at least the width and height of the ejector baffle plate (30).

8. Rotary feeder hopper according to one of the preceding claims 6 or 7, **characterized in that** the height of the ejector baffle plate (30) relative to the rolling surface has been designed to prevent correctly positioned elements (20) from being ejected and to effect ejection of incorrectly positioned elements (20).

9. Rotary feeder hopper according to one of the preceding claims, **characterized in that** the rolling surface (28) has a discharge gap (29) for discharging the elements (20).

10. Rotary feeder hopper according to one of the preceding claims, **characterized in that** a discharge rail (16) adjoins the discharge gap (29), which rail (16) is adapted to receive elements (20) discharged through the gap.

11. Rotary feeder hopper according to one of the preceding claims 9 or 10, **characterized in that** the rolling surface (28) is rounded at the discharge gap (29), wherein the radius starting from the rolling surface (28) in the direction of the gap to the discharge rail (16) is smaller in the direction of rotation of the star feeder (18) than the opposite radius, as seen in the direction of rotation, starting from the discharge gap (29) to the rolling surface (28).

12. Rotary feeder hopper according to one of the preceding claims, **characterized in that** the star feeder (18) is made of plastic.

13. Rotary feeder hopper according to one of the preceding claims, **characterized in that** the star feeder (18) is connected to a drive of the rotary feeder hopper (10) via a freewheel against the rotary conveying direction.

## Revendications

1. Trémie à roue alvéolaire (10) servant à transporter et à individualiser des éléments (20) comprenant au moins une tige, la trémie comportant une roue alvéolaire (18), laquelle présente des alvéoles de transport (22) situées dans la direction radiale et destinées à transporter les éléments (20), dans laquelle la roue alvéolaire (18) est entourée au moins en partie par une paroi de trémie (14), dans laquelle les alvéoles de transport (22) présentent des perforations (23) sur la roue alvéolaire (18) et une surface de roulement (28), sur laquelle les éléments (20) comportant une tige reposent au moins en partie avec leur tige et peuvent être transportés en roulant, est située au-dessous de la roue alvéolaire (18) dans la zone des perforations (23), **caractérisée en ce que** la surface de roulement (28) est circulaire au moins dans sa périphérie extérieure et son diamètre extérieur correspond au moins en partie au diamètre de la roue alvéolaire (18).

2. Trémie à roue alvéolaire selon la revendication 1, **caractérisée en ce que** l'alvéole de transport (22) présente un chanfrein d'éjection (24) s'étendant radialement vers l'intérieur à partir de la perforation (23).

3. Trémie à roue alvéolaire selon l'une quelconque des revendications précédentes, **caractérisée en ce qu'**une paroi périphérique (26) est prévue au moins à hauteur axiale de la roue alvéolaire (18).

4. Trémie à roue alvéolaire selon la revendication 3, **caractérisée en ce que** le diamètre de la paroi périphérique (26) est dimensionné de telle manière qu'un entrefer (31) dans lequel une tête d'un élément (20) peut être guidée se forme entre la paroi périphérique (26) et la roue alvéolaire (18).

5. Trémie à roue alvéolaire selon l'une quelconque des revendications 3 ou 4, **caractérisée en ce que** la paroi périphérique (26) forme une unité modulaire avec la paroi de trémie (14).

6. Trémie à roue alvéolaire selon l'une quelconque des revendications précédentes, **caractérisée en ce qu'**une chicane d'éjection (30) saillante, laquelle éjecte les éléments (20) non orientés correctement en position de l'alvéole de transport (22), est prévue sur la surface de roulement (28).

7. Trémie à roue alvéolaire selon la revendication 6, **caractérisée en ce que** la chicane d'éjection (30) est réalisée en particulier sous la forme d'un coin sur la surface de roulement (28) et la roue alvéolaire (18) comporte sur sa face inférieure une rainure périphérique (32) présentant au moins la largeur et la hauteur de la chicane d'éjection (30).

8. Trémie à roue alvéolaire selon l'une quelconque des revendications 6 ou 7, **caractérisée en ce que** la hauteur de la chicane d'éjection (30) par rapport à la surface de roulement (28) est conçue de telle manière que les éléments (20) orientés correctement en position ne sont pas éjectés et que les éléments (20) mal orientés en position sont éjectés.

9. Trémie à roue alvéolaire selon l'une quelconque des revendications précédentes, **caractérisée en ce que** la surface de roulement (28) présente une fente de distribution (29) pour la distribution des éléments (20).

10. Trémie à roue alvéolaire selon l'une quelconque des revendications précédentes, **caractérisée en ce qu'**un rail de distribution (16), lequel réceptionne les éléments (20) évacués à travers la fente, se situe dans le prolongement de la fente de distribution (29).

11. Trémie à roue alvéolaire selon l'une quelconque des revendications précédentes 9 ou 10, **caractérisée en ce que** la surface de roulement (28) est arrondie au niveau de la fente de distribution (29), dans laquelle le rayon partant de la surface de roulement (28) en direction de la fente jusqu'au rail d'évacuation (16) dans le sens de rotation de la roue alvéolaire (18) est inférieur au rayon, opposé au sens de rotation, partant de la fente de distribution (29) jusqu'à la surface de roulement (28).

12. Trémie à roue alvéolaire selon l'une quelconque des revendications précédentes, **caractérisée en ce que** la roue alvéolaire (18) est réalisée en matière plastique.

13. Trémie à roue alvéolaire selon l'une quelconque des revendications précédentes, **caractérisée en ce que** la roue alvéolaire (18) est pourvue, sur toute l'étendue d'une course libre à l'encontre du sens de rotation de transport, d'un entraînement de la trémie à roue alvéolaire (10).
